Europäisches Patentamt

(19) European Patent Office

Office européen des brevets

(11) **EP 0 730 944 B1**

(12) **EUROPEAN PATENT SPECIFICATION**

(45) Date of publication and mention
of the grant of the patent:
**06.10.1999 Bulletin 1999/40**

(51) Int. Cl.$^6$: **B29C 53/06**, B23K 26/00

(21) Application number: **95301573.2**

(22) Date of filing: **10.03.1995**

(54) **Method of forming a line of weakness in a heat-shrinkable laminate**

Verfahren zur Herstellung einer Schwächungslinie in einem wärmeschrumpfbaren Laminat

Procédé pour la formation d'une ligne d'affaiblissement dans un laminé thermorétractable

(84) Designated Contracting States:
**DE ES FR GB IT**

(43) Date of publication of application:
**11.09.1996 Bulletin 1996/37**

(73) Proprietor: **Cryovac, Inc.**
**Duncan, S.C. 29334-0464 (US)**

(72) Inventors:
 • **Arena, Francesco**
**I-21047 Saronno (VA) (IT)**
 • **Spitz, Claudia**
**I-20017 Rho (MI) (IT)**
 • **Musazzi, Roberto**
**I-20014 Nerviano (MI) (IT)**

(74) Representative:
**Jones, Helen Marjorie Meredith**
**Gill Jennings & Every,**
**Broadgate House,**
**7 Eldon Street**
**London EC2M 7LH (GB)**

(56) References cited:
**EP-A- 0 515 825           FR-A- 2 356 487**
**US-A- 3 790 744           US-A- 5 234 123**

 • **PATENT ABSTRACTS OF JAPAN vol. 018 no. 424**
**(M-1652) ,9 August 1994 & JP-A-06 127535**
**(TOYO AEROSOL KOGYO KK) 10 May 1994,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to the provision of a line of weakness in a heat-shrinkable packaging material, in particular a mono- or multi-layered heat-shrinkable packaging material, so as to facilitate easy opening in bags formed of this material.

It is known to provide heat-shrinkable packaging material for, for instance, food stuffs. The materials are provided as films which have been manufactured in such a way that when they are heated to an appropriate temperature they reduce their original dimensions (width or length or both). These films may be made into bags which are sealed under vacuum around the material to be packaged and subsequently shrunk so as to provide a relatively wrinkle-free package. The package must be fluid-tight.

Polymeric packaging films including heat-shrinkable films are often provided in the form of two or more layers of polymeric material. Provision of a film in the form of two or more layers allows the use of materials with differing properties. This gives rise to the possibility of optimising protection of the products contained by combining for instance the gas barrier properties of one material with the moisture barrier properties of another, the improved sealability of the skin layers with the improved mechanical properties of the film due to the use of abuse-resistant layers; etc. These heat-shrinkable materials provide excellent protection to the product, for instance food, contained. However, it can be difficult for the end user to open such plastic packages by tearing the film itself; in particular it is difficult to control the direction of tearing.

It is known that opening by tearing, and directing of this tearing, may be facilitated by providing a line of weakness in the film. The formation of a line of weakness can give easy opening by preferential tearing along that line.

It is known to provide a line of weakness in a packaging film by the provision of a line of perforations. The disadvantage of this system is that the perforations allow fluid communication between the product and the external environment. This is particularly unsuitable when a multi-layer oxygen-barrier packaging film is used since it defeats a major object of using such films which is to improve barrier properties.

US Patent 3,790,744 describes a method of forming a line of weakness in a non-heat-shrinkable (i.e dimensionally stable) laminate. According to this method a laser beam is used to form a line of weakness in at least one layer of the laminate, whilst leaving at least one other layer of the laminate unaffected. For instance, the former layer may preferentially absorb energy. The line of weakness is produced because the laser energy absorbed by that layer causes substantial vaporisation of components of the layer. The resulting bubbles can merge, coalesce and form a groove. A disadvantage of this system is that it requires degradation of at least one layer in the non-heat-shrinkable laminate with consequent localised reduction in the performance of the film in respect of the property contributed by the layer.

US Patent 3,626,143 also uses a laser beam to provide a line of weakness in a homogeneous thermoplastic film. This is done by degradation of the material by the laser beam to provide a score line in one surface.

In EP-A-357,841 a further method is described of providing a score line on dimensionally stable packaging film laminates by using a laser, which vaporises polymer forming one layer of the packaging material which is otherwise not tearable.

It is also known from US Patent 4,549,063 to use a laser to provide score lines in the protective backing of an adhesive laminate having pressure-sensitive adhesive.

It would be desirable to be able to provide in a heat-shrinkable film material a line of weakness to facilitate easy tearing without degrading the material of the film at that point and without substantially compromising the film properties including its barrier properties.

According to the invention there is provided a method of providing a line of weakness in a continuous web of film having one or more layers, comprising directing onto the web a beam of radiant energy whilst causing to move along the web the beam action area to define a path on the web, characterised in that the film is heat-shrinkable and the intensity, wavelength and incident angle of the beam and velocity of the beam action area along the web are selected such that the material of the or at least one layer in a central region along the path of the beam action area absorbs at least some of the incident radiant energy and is caused to be at a temperature at or above the softening temperature of the material and the regions of the film along the edges of and directly adjacent to the said central region of the path are caused to be at a temperature at or above the shrinkage temperature of the film but below the melting temperature of the material of any layer and substantially no evaporation or degradation of the material of any layer of the film material occurs, whereby the film in the said central region becomes reduced in thickness and the film in the said edge regions becomes increased in thickness.

In the context of this specification a heat-shrinkable film is defined as a film which shrinks by at least 15% in at least one direction when immersed in a water bath at a temperature of 90°C for four seconds. The web of film treated is shrinkable in at least the transverse direction and is preferably shrinkable in both machine and transverse directions.

In the process of the invention radiant energy from the beam directed at the film is absorbed by at least one layer making up the film in the region of the film in the path of the point of contact of the beam with the film (beam action area). Preferably and most usually energy is absorbed by each of the layers making up the film.

The energy absorbed by the or each layer is transformed primarily into heat and the temperature of the material of the layer rises.

The characteristics of the beam and its velocity with respect to the web are chosen so that at least one (more usually, each) layer in the central region along the path of the beam action area is brought to a temperature at or above its softening (Vicat) temperature. The temperature is one at which the material becomes softened and at least to some extent flowable. Preferably the specified region of each layer is brought to a temperature close to (but below), equal to or above the melting temperature of that layer. By "close to" the melting temperature we mean that the temperature of a layer must be higher than the softening temperature (Vicat temperature) of the resin and closer to the melting temperature than to the softening temperature. Preferably the specified region of each layer is brought to the melting temperature of the layer or a temperature higher than that but lower than the polymer degradation temperature. It is not essential that all layers are brought to their softening temperature. It is sufficient that enough of the layers become flowable that the film as a whole in the path of the beam action area is capable of being reduced in thickness as described below.

Some of the heat generated in the layer or layers of film in the central region of the path of the beam action area will be transferred by conduction to the said edge regions. Some of the heat generated in the edge regions will be incident energy absorbed directly, the incident power at those regions being low relative to the incident power at the central region. Again, the characteristics of the beam are chosen so that for any particular film the material making up the edge regions is brought to a temperature at or above the shrinkage temperature of this film but below the melting temperature of the material of any layer.

The path of the beam is usually rectilinear. Preferably the energy source is stationary and the web is moved relative to the energy source, usually at a constant velocity.

As a result of treatment with the beam the film in the edge regions is caused to shrink. The material in the central softened region will flow outwards from the centre of the path towards the shrinking edge regions. This brings about a reduction in thickness of the film in the central region of the path of the beam action area and an increase in thickness in both edge regions.

The particular characteristics of the beam and the velocity at which the beam action area is caused to move along the film are chosen according to the particular structure, e.g. the thickness of the film, the softening and melting temperatures of the material in each layer, the shrinkage temperature of the film etc.

The amount of energy absorbed at any point in the film depends on

(a) the absorption coefficient ($\alpha$) of the resin at that point (this can be calculated by evaluating the absorption of the resin at the wavelength specific of the beam by means of a conventional IR absorption spectrum)

(b) the intensity of the beam at that point and

(c) the periodic over which exposure takes place (this factor will depend on the speed at which the beam action area moves along the web of film).

Since the radiant energy of the beam is absorbed as the beam passes into the material, the intensity of the beam, or the remaining energy it carries, decreases as the beam passes more deeply into the thickness of the material.

For a monolayer structure the intensity of the beam at a given point within the structure, at a distance "d" from its surface, is determined by the exponential absorption law:

$$I = I^0 e^{-\alpha d}$$

wherein I is the beam intensity at the point at a distance d from the surface of the monolayer structure receiving the incident energy $I^0$ and $\alpha$ is the coefficient of absorption of the material used for the monolayer structure.

In the case of a multilayer structure made of different polymeric materials, each having its own characteristic coefficient of absorption, said materials being sequentially disposed with respect to the incident beam, the intensity of the beam incident upon each different layer and therefore the energy per unit time which will be absorbed by each layer can be calculated in a similar way.

The film used in the method of the invention may be a single-layer film made up of one layer comprising substantially only one polymer component or a blend of two or more components. Preferably however the film has a multi-layer structure, i.e. it is made up of two or more layers. The layers are generally arranged so that no two contiguous layers consist of the same polymeric material. The materials which form the layers are usually selected to maximise the above-described advantage of using multi-layer heat-shrinkable films as packing materials, including the optimisation of various types of barrier properties.

Suitable multilayer films comprising a barrier layer will preferably comprise at least a heat-sealable skin layer and an abuse resistant skin layer on the opposite sides of the core barrier layer to provide a three-layer film. Additional layers may however be present such as one or more intermediate layers between the barrier layer and the skin layers. These intermediate layers may serve the purpose of improving the film mechanical properties or protecting a moisture sensitive barrier layer from moisture. Tie or adhesive layers may also be included to aid adhesion of adjacent layers. Additional barrier layers of the same or different material from the first one may also be included to improve the film barrier properties.

The heat-sealable layer used in a film may be any conventional heat-sealable layer such as for example VLDPE (a copolymer of ethylene and one or more $(C_4-C_8)$-$\alpha$-olefins, having a density $\leq$ 0.915 g/cc), LLDPE (a copolymer of ethylene and one or more $(C_4-C_8)$-$\alpha$-olefins, having a density > 0.915 g/cc), a single-site or metallocene ethylene-$\alpha$-olefin (i.e. a copolymer of ethylene and one or more $(C_4-C_8)$-$\alpha$-olefins, characterised by a narrow composition distribution and a narrow molecular weight distribution and by the method of manufacture which involves the use of a so-called metallocene or single-site catalyst), a copolymer of ethylene and acrylic acid or methacrylic acid (including an ionomer), an ethylene-butyl acrylate copolymer, or a polyamide. In a preferred embodiment, a VLDPE, polyamide, or butyl acrylate copolymer heat-sealable layer is used. These materials may also be used as an abuse-resistant skin layer. Preferred for this purpose is ethylene-methacrylic acid copolymer.

The term "copolymer of ethylene and acrylic acid or methacrylic acid" refers to a copolymer of ethylene with a copolymerisable ethylenically unsaturated carboxylic acidic monomer selected from acrylic acid and methacrylic acid. The copolymer typically contains from about 4 to about 18% by weight of acrylic or methacrylic acid units. Said copolymer can also contain, copolymerised therein, an alkyl acrylate or methacrylate, such as n-butyl acrylate or methacrylate or isobutyl acrylate or methacrylate. Said copolymer can be in the free acid form as well in the ionised or partially ionised form wherein the neutralising cation can be any suitable metal ion, e.g. an alkali metal ion, a zinc ion or other multivalent metal ions; in this ionised case the copolymer is also termed as "ionomer".

The term polyamides is intended to refer to both polyamides and, preferably, co-polyamides. Suitable polyamides to be used include those polymers commonly referred to as e.g. nylon 6, nylon 66, nylon 6-66, nylon 610, nylon 12, nylon 69, and nylon 6-12.

When intermediate layers are present between the barrier layer and the skin layers, thermoplastic resins which can suitably be employed in these optional additional layers comprise polyolefins, i.e. thermoplastic resins obtained by homopolymerisation of an olefin or by copolymerisation of two or more olefins or of one or more olefins with other comononomers, wherein the olefin units are anyway present in larger amounts than any comonomer which may be present. Suitable examples of "polyolefins" are polyethylenes, ethylene-$\alpha$-olefin copolymers, and in particular heterogeneous ethylene-$\alpha$-olefin copolymers, or homogenous (Tafmer™-like or single-site) ethylene-$\alpha$-olefin copolymers, ethylene-vinyl acetate copolymers, ethyleneacrylic acid or more methacrylic acid copolymers, and the like.

Depending on the choice of the polymers used for the barrier, heat-sealable, abuse-resistant and intermediate layers, it may be necessary to use tie layers between some or all of them. Suitable adhesives or tie layers typically comprise "modified polyolefins", i.e. polyolefins characterised by the presence of functional groups such as, typically, anhydride or carboxy groups. Examples of said modified polyolefins are graft copolymers of maleic acid or anhydride onto ethylene-vinyl acetate copolymers, graft copolymers of fused ring carboxylic anhydrides onto polyethylene, resin mixtures of these and mixtures with polyethylene or ethylene-$\alpha$-olefin copolymers.

Suitable barrier layers include any of the known barrier polymeric resins, such as a PVDC, EVOH, or PVOH. A preferred barrier layer is PVDC or EVOH. The term PVDC refers to a vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates (e.g. methyl acrylate) or to a blend thereof in different proportions. Generally said PVDC will contain plasticisers and/or stabilisers as known in the art. The term EVOH refers to saponified products of ethylene-vinyl ester copolymers, generally of ethylene-vinyl acetate copolymers, wherein the ethylene content is typically between 20 and 60 mol% of monomer units and the degree of saponification is generally between 85 and 99.5% mol%. The EVOH can be employed as such or blended with other EVOHs or with one or more polyamides.

It will be understood that blends of resins may be used in place of individual resins in the various layers of the structures and that other resins even if not specifically indicated here might be employed.

The maximum number of layers in the structure to be used in the method of the present invention will depend only on the equipment available for the manufacture thereof. While up to ten layers in the overall structure can be easily devised on the basis of the commonly available manufacturing lines, in practice structures with up to seven or eight layers will be preferred.

The resins used in the manufacture of the films used in the process of the present invention can contain suitable additives as known in the art in order to improve the properties of the film of the manufacturing process thereof. As an example the resins may contain stabilisers, antioxidants, pigments, U.V. absorbers, etc. In particular the outer layer can comprise slip and anti-blocking agents as conventionally used in this field.

The structure of the film to be treated may furthermore be partially or wholly cross-linked. In particular cross-linking is induced by subjecting the whole film or part of it to a high energy electron treatment. Irradiation is most preferably performed prior to orientation but it could also be performed after orientation. Radiation dosages are referred to herein in terms of megarad (MRad). A MRad is $10^6$ Rad with a Rad being the quantity of irradiation that results in absorption of 100 ergs

$(10^{-5}J)$ of energy per gram of irradiated material regardless of the source of radiation. A suitable radiation dosage of high energy electrons is up to about 14 MRad, more preferably in the range of from 2 to 12 and even more preferably in the range of from 4 to 9 MRad.

Particularly preferred structures are for instance those structures bearing a thick layer of a polymer having a low coefficient of absorption as the first layer to be hit by the laser beam. Examples of polymer resins with a low coefficient of absorption are polyamides and ethylene-$\alpha$-olefin.

Most preferred structure are those structures bearing a polyamide first layer at least 10$\mu$, preferably 15$\mu$, and even more preferably 20$\mu$ thick.

Examples of particularly preferred structures include a 5 layer structure comprising sequentially disposed layers of polyamide, ethylene-vinyl acetate copolymer, PVDC [barrier layer], ethylene-vinyl acetate copolymer, and ethylene-methacrylic acid copolymer; or a 7-layer structure derivable from the above 5-layer structure through the splitting of the ethylene-vinyl acetate layer following the barrier layer and the insertion of a layer of an ethylene-$\alpha$-olefin copolymer thereinbetween. Still an alternative preferred structure would be a 7-layer structure derivable from the above 5-layer structure through the splitting of the ethylene-vinyl acetate layer preceding the barrier layer and the insertion of a layer of an ethylene-$\alpha$-olefin copolymer thereinbetween.

Other structures which could be used in the process of the present invention include simple 3 or 4 layer structure such as structures having sequentially disposed layers of VLDPE, PVDC, VLDPE; or ethylene-vinyl acetate copolymer, PVDC, ethylene-vinyl acetate copolymer; or ethylene-vinyl acetate copolymer, PVDC, ethylene-vinyl acetate copolymer, VLDPE.

In general a typical heat-shrinkable structure for use in the method of the present invention has a total thickness of from 30 to 300$\mu$, preferably of from 40 to 200$\mu$, and even more preferably of from 45 to 120$\mu$.

The thickness of each of the layers making up the film must be taken into account when process conditions are being established. The greater the thickness of any particular layer the more energy it will absorb and the more energy will be removed from the beam before it reaches any subsequent layers. Therefore the thickness and the type of material to give an appropriate absorption coefficient for the layers must be chosen to ensure that the materials can be brought to or above their respective melting temperatures in the central region.

In general it is preferred that the material which makes up the layer at the surface of the film on the side on which the beam of radiant energy is incident has a low coefficient of absorption. If it is required to increase the amount of energy absorbed by this layer it is preferred to increase its thickness rather than to use a resin of higher $\alpha$. Use of low $\alpha$ for the first incident surface layer is preferred since it reduces risk of deterioration of that layer; this might occur if the layer absorbed a large proportion of the incident energy, which is of maximum intensity at the first incident surface. Use of low $\alpha$ for this layer is also useful because it reduces shielding of subsequent layers and ensures they receive adequate incident energy.

It is also preferred for the layer at the opposite surface of the film to be formed from a material having a high coefficient of absorption, to maximise the effect of a beam of energy which is usually significantly reduced in intensity by the time it reaches this final layer.

It is generally desirable that the barrier layer should absorb less incident energy than other layers, to avoid as much as possible compromising any of its barrier properties. A barrier layer transparent to the incident radiation would be most preferred but this is usually impractical and the barrier layer is often brought to its softening temperature and flows to at least some extent. It is preferred that the barrier layer or layers flow and become reduced in thickness to a lesser extent than the non-barrier layers.

It is preferred that the film in the central region of the path of the beam action area becomes reduced in thickness so that at the thinnest part (usually at the centre line) it has a thickness of 20 to 70%, preferably 40 to 60%, more preferably about 50% the thickness of the untreated film. The thickness of the treated film within the central region will vary across that region, generally undergoing maximum reduction in thickness at the centre line. The central region which is reduced in thickness is the region between the two points on each side of the centre line at which the total thickness of the film becomes less than that of the untreated film. The width of this region is determined by the size of the beam action area, and generally varies from about 50$\mu$m to 200$\mu$m.

The thickened edge regions generally increase in thickness by an amount such that the maximum thickness is between about 120% and 180%, preferably about 160%, the thickness of the untreated film. The width of the thickened edge regions is the distance between the points on either side of the line of maximum thickness where the thickness becomes greater than that of the untreated film. Generally each thickened edge region has a width of about 50$\mu$m to 200$\mu$m.

It is possible to provide tension in the film web which is treated so that shrinkage of the edge regions results in flowing and thinning of the central regions rather than only in movement of the untreated regions towards the central treated region. In general, friction between the web of film and the surface on which it is carried is sufficient although it is possible to provide means for holding the untreated region of the web of film in place.

It is generally preferred that the edge regions shrink only in the cross-direction (perpendicular to the machine direction, i.e. direction of travel of the beam action area). This may be achieved by maintaining a stress in the machine direction on the film web, for instance by friction between the film web and its carrier or by provision of holding means.

In the method of the invention a beam of radiant energy is directed at the film. The type and wavelength of the radiant energy are chosen according to the materials which make up the film. It is important that the radiant energy is of a type which is absorbed to at least some extent by the or each layer making up the film. Wavelengths should be carefully selected to ensure absorption. It is preferred that the beam is of a single wavelength (monochromatic).

Preferably the beam of radiant energy is a laser beam. The source of the laser beam may be a single mode or a multimode laser. A single mode laser is preferred.

A preferred laser is a $CO_2$ laser, which provides a monochromatic beam of wavelength 10.6μm. Such a wavelength is absorbed by the majority of materials used to make heat-shrinkable packaging films. Other types of laser may also be used provided the wavelength of the radiation is suitable to ensure its absorption by the materials making up the film used in the process.

The intensity of the beam is chosen so as to comply with the requirements of the method of the invention. Intensity is affected by the power of the source of the beam and the area of the contact between beam and film. At a constant total power, increasing the size of the beam action area reduces the intensity of the incident energy. At a constant beam action area, increasing the power of the source will result in increased intensity. Variation in size of the beam action area can be achieved by focusing the beam using a lens, or varying the distance between the lens and the film, or between the laser and the film.

The intensity of the incident energy usually varies across the beam action area. Variation of the energy intensity along a straight line passing through the centre of the beam action area is usually a bell-shaped curve.

The beam of radiant energy is usually substantially circular. Generally the beam of radiant energy is directed at the film perpendicular to its plane. It is also possible to use a different angle of incidence of the beam, though the axis preferably remains in the same plane as the centre line of a rectilinear beam path. Use of any incident angle other than the perpendicular results in a longer pathway of the beam through a layer of a given thickness. Path length affects the energy absorption and final temperature of the material of any particular layer.

Angle of incidence can be varied by the skilled person according to the characteristics of the particular film being treated.

When a substantially circular beam is directed perpendicular to the plane of the film the beam action area is substantially circular. When a substantially circular beam is directed at the film at any other angle of incidence the beam action area is elliptical. Beam action area diameters are quoted to be the length of the diameter of a circular beam action area or the length of the minor axis of an elliptical beam action area.

When a $CO_2$ single-mode laser is used preferred beam action area diameters range from about 100 to 600μm, preferably 200 to 500μm. A $CO_2$ laser is preferably used at a power from 5 to 50 watts, more preferably 10 to 40 watts. We have found that these conditions are particularly suitable for providing a line of weakness in the above-described 5-/7-layer preferred film structure.

The amount of energy absorbed at any point depends also on the period of exposure of that point to incident energy. This time is determined by the speed of movement of the beam action area along the film.

The relative movement between the beam action area and the web of film may be achieved by moving either the source of the beam of radiant energy, the web or both. Generally it is more convenient to keep the source of radiant energy stationary and to move the film web so as to provide a rectilinear path. When the source of radiant energy is a laser it is particularly convenient to keep the laser stationary because it is preferred to provide a screen on the far side of the film to absorb any radiation not absorbed within the film. This is easier to do if the laser and screen are both kept stationary.

The speed of the beam action area along the film is usually constant throughout the formation of any one continuous line of weakness. It may vary from about 100 to about 300 feet per minute (0.5 to 1.8 m/s).

The line of weakness may be a continuous line. Alternatively, it may be provided so that alternate weak and untreated or less weakened regions form a broken line. The spaces between the weakened dots may be entirely untreated. Alternatively they may be weakened to a lesser extent than the weaker regions.

Alternating very weak and less weak (or untreated) regions may be achieved by increasing and decreasing the speed of travel of the beam action area across the film. Areas where the beam action area travels faster will absorb less energy and be less affected than those where it travels more slowly.

Alternatively the power emitted by the source of radiant energy may be increased and decreased as the beam action area travels along the film.

The heat-shrinkable film used in the method of the present invention may be one which has been produced by conventional methods. Preferred is the so-called "trapped bubble" process. This is a known process typically used for the manufacture of heat-shrinkable films to be used for food control packaging.

According to this process, the multilayer film is co-extruded through a round die to obtain a tube of molten polymer which is quenched immediately after extrusion without being expanded. It may then optionally be cross-linked and is then heated to a temperature which is well below the melting temperature of the resins employed, typically by passing it through a hot water bath, and expanded, still at this temperature, by internal air pressure to get the transversal orientation and/or by a differential speed of the pinch rolls which hold the thus obtained "trapped bubble" to provide the longitudinal orientation. The film is then rapidly cooled to somehow freeze the molecules of the film in their oriented state and then wound.

Depending on the number of layers in the structure it may be advisable or necessary to split the co-extrusion step: a tube will first be formed of a limited number of layers, with the heat-sealing layer typically on the inside of the tube; this tube will be quenched quickly and before submitting it to the orientation step it will be extrusion-coated with the remaining layers, again quenched quickly, optionally cross-linked, and then passed to the orientation.

During the extrusion-coating the tube will be slightly inflated just to keep it in the form of a tube and avoid that it collapses.

The coating step can be simultaneous, by co-extruding all the remaining layers altogether, so as to simultaneously adhere all of them, one over the other, to the quenched tube obtained in the first co-extrusion step, or this coating step can be repeated as many times as the layers which are to be added.

The extrusion-coating step is also required when a film only partially cross-linked is desired such as in the case of barrier structures comprising a PVDC layer which may be damaged by irradiation. In this case the irradiation step will be performed after the first extrusion (which would not comprise the PVDC barrier layer) and before the extrusion-coating.

This process produces a tube of heat-shrinkable film. Generally the process of the invention is carried out on flattened tubing. It may be desirable to provide a line of weakness in both layers of this flattened tube. This may be achieved by using a single source of a beam of radiant energy. The action area of this single beam may be caused to travel along a path first on one side of the tubing and then on the other side. Alternatively a single beam may be split and redirected so as to cause one portion of the beam to be directed to one side of the flattened tubing and a second portion of the beam to be directed at the other side of the tubing. Alternatively, two sources of radiant energy may be used, each being directed at one side of the flattened tubing.

If a flat structure is desired, the tubular one obtained as described above is slit at one or both edges in a conventional way. The flat structure may then be treated according to the process of the invention.

In general, conventional heat-shrinkable films begin to shrink at a temperature of around 50 to 60°C and give maximum shrink at a temperature close to their orientation temperature, typically 80 to 98°C.

The film which is produced by the method of the present invention is a novel product. According to a second aspect of the invention there is provided a heat-shrinkable film obtainable by the method of the invention which has a line of weakness of reduced thickness bordered by two regions of increased thickness, relative to the thickness of the untreated film.

The treated film, usually in the form of tubing, may be formed into a heat-shrinkable bag. According to a third aspect of the invention there is provided a process of the invention in which, after the line of weakness has been provided, the heat-shrinkable web of film is formed into a bag. Formation of the bag, from tubing or from sheets of the web of film, may be done by conventional methods.

The treated web of film or the bag formed from the treated web of film may be used to pack items. According to a fourth aspect of the invention there is provided a process in which the film treated according to the process of the first aspect of the invention or the bag produced in the process of the third aspect of the invention is used to pack an item under vacuum and is subsequently shrunk around the item by heating.

The invention also provides, in a fifth aspect, a product comprising an item packed in a film produced by the process of the first aspect of the invention or the bag produced by the process of the third aspect of the invention which has been shrunk around the item by heating.

Where the treated film obtained according to the method of the invention is subsequently formed into a bag it is preferred that there is a distance of from 1 to 5cm between the edge of the film which forms the bag and the seal created to transform tubing or flat film into a bag. This is done in order to provide the bag with a "skirt" in which a notch substantially perpendicular to the seal and continuous with the line of weakness can be made. This notch allows easy beginning of tearing along the line of weakness.

The invention will now be illustrated with reference to the accompanying figures.

Figure 1 illustrates the preferred film structures useful in the method of the invention.

Figure 2 illustrates a typical film in cross-section after treatment according to the method of the invention.

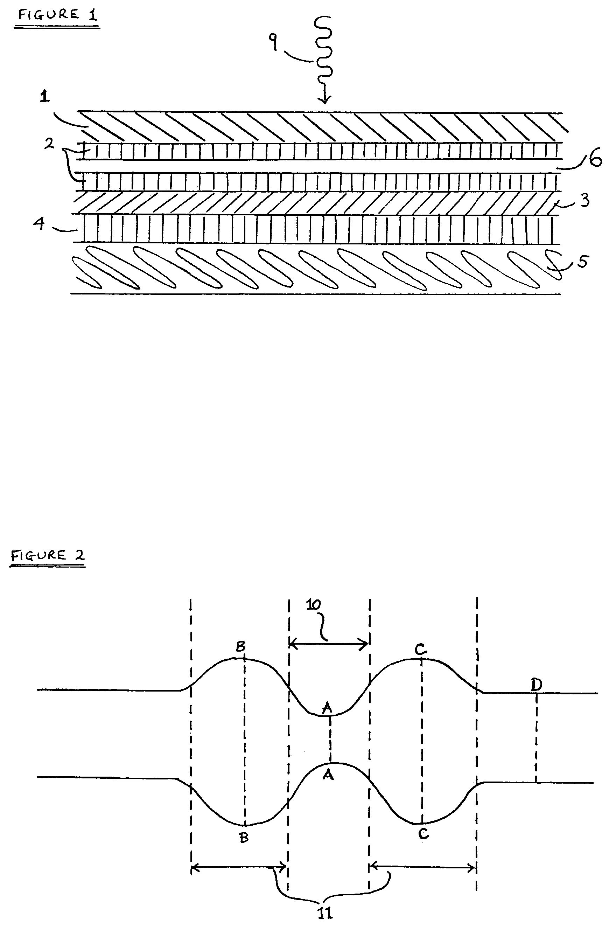

Figure 1 shows the cross-section through the preferred multi-layer structure having a polyamide layer 1 as the layer which would first be hit by the laser beam 9. In particular this Figure refers to the preferred 5- or 7-layer structures whichever one of EVA layers 2, 4 may be interrupted by an LLDPE layer 6, layer 3 is the barrier PVDC layer and layer 5 is the abuse resistant EMAA layer.

In Figure 2 the region 10 is the region in the path of the beam of radiant energy. This has been reduced to a thickness of about 50μm at the line A-A. The thickened regions 11 have been increased in thickness to a thickness of around 200μm, at the lines B-B and C-C. The thickness of the untreated regions of the film, line D-D, is approximately 120μm.

The following are examples of carrying out the method according to the present invention:

<u>Example 1</u>

A beam from a single-mode $CO_2$ laser at a power of 10 to 40 watts was focused along a multilayer film to a beam action area diameter of from 200 to 500μ. The wavelength of the monochromatic radiation emitted by the laser was 10.6μ.

The laser was positioned so that the beam was directed perpendicularly to the plane of the film web, which was passed under the laser. The speed of the film was increased from zero to a value of 200 feet/min (1.016 m/s).

Starting structures suitable to be used in the above described method to obtain a weakness line in the final packaging material are indicated below:

(a) a 5-layer structure with an overall thickness of about 100μ, comprising sequentially disposed layers of polyamide ($\alpha$ = 1.02x10$^4$m-1), ethylene-vinyl acetate copolymer ($\alpha$ = 1.58x10$^4$m-1), PVDC ($\alpha$ = 2.13x10$^4$m-1), ethylene-vinyl acetate copolymer ($\alpha$ = 1.67x10$^4$m-1 layer), and ethylene-methacrylic acid copolymer ($\alpha$ = 1.78x10$^4$m-1) with the following layer thicknesses: 24/6/8/18/43μ.

(b) a 7-layer structure with an overall thickness of about 120μ, comprising sequentially disposed layers of polyamide ($\alpha$ = 1.02x10$^4$m-1), ethylene-vinyl acetate copolymer ($\alpha$ = 1.58x10$^4$m-1), PVDC ($\alpha$ = 2.13x10$^4$m-1), ethylene-vinyl acetate copolymer ($\alpha$ = 1.67x10$^4$m-1), ethylene-$\alpha$-olefin copolymer (LLDPE) ($\alpha$ = 0.33x10$^4$m-1), ethylene-vinyl acetate copolymer ($\alpha$ = 1.67x10$^4$m-1) and ethylene-methacrylic acid copolymer ($\alpha$ = 1.78x10$^4$m-1) with the following layer thicknesses: 25/6/8/6/25/7/43μ.

(c) a 7-layer structure with an overall thickness of about 120μ, comprising sequentially disposed layers of polyamide ($\alpha$ = 1.02x10$^4$m-1), ethylene-vinyl acetate copolymer ($\alpha$ = 1.58x10$^4$m-1), ethylene-$\alpha$-olefin copolymer (LLDPE) ($\alpha$ = 0.33x10$^4$m-1), ethylene-vinyl acetate copolymer ($\alpha$ = 1.67x10$^4$m-1), PVDC, ($\alpha$ = 2.13x10$^4$m-1), ethylene-vinyl acetate copolymer ($\alpha$ = 1.67x10$^4$m-1) and ethylene-methacrylic acid copolymer ($\alpha$ = 1.78x10$^4$m-1) with the following layer thicknesses: 25/4/5/2/8/13/43μ.

A schematic view of the resulting film is illustrated in Figure 2.

Representative films obtained by the above method were tested to confirm that the oxygen barrier properties of the films were adequate. Food items, including fresh red meat and apple slices, were packed using the film. The packaged items were examined at intervals after packaging for any changes in colour of the packaged items along the lines of weakness as such changes would have indicated the presence of oxidation processes and therefore of a deterioration of the barrier properties of the treated films with respect to the starting ones. The results obtained were satisfactory.

<u>Example 2</u>

Using a single mode $CO_2$ laser at a power of from 10 to 40 watts and focused to give a beam action area diameter of from 200 to 500μ on the following 4-layer structure: ethylene-$\alpha$-olefin copolymer (VLDPE) ($\alpha$ = 4.21x10$^4$m-1), ethylene-vinyl acetate copolymer ($\alpha$ = 9.19x10$^4$m-1), PVDC ($\alpha$ = 3.43x10$^4$m-1), and ethylene-vinyl acetate copolymer ($\alpha$ = 9.19x10$^4$m-1) having an overall thickness of about 60μ and partial thicknesses of about 12/26/6/16μ, it has been calculated that an angle of about 4° between the film and the beam is most suitable to provide the desired weakness line while maintaining the original structure barrier properties when the first layer on which the beam is incident is the outer ethylene-vinyl acetate copolymer layer.

**Claims**

1. A method of providing a line of weakness in a continuous web of film having one or more layers, comprising directing onto the web a beam of radiant energy whilst causing to move along the web the beam action area to define a path on the web, characterised in that the film is heat-shrinkable and the intensity, wavelength and incident angle of the beam and velocity of the beam action area along the web are selected such that the material of the or at least one layer in a central region along the path of the beam action area absorbs at least some of the incident radiant energy and is caused to be at a temperature at or above the softening temperature of the material and the regions of the film along the edges of and directly adjacent to the said central region of the path are caused to be at a temperature at or above the shrinkage temperature of the film but below the melting temperature of the material of any layer and substantially no evaporation or degradation of the material of any layer of the film material occurs, whereby the film in the said central region becomes reduced in thickness and the film in the said edge regions becomes increased in thickness.

2. A method according to claim 1 in which the film comprises two or more layers.

3. A method according to claim 1 or claim 2 in which the region of the film in the path of the beam action area is reduced to a thickness of from 0.2 to 0.7 times the thickness of the untreated film.

4. A method according to any preceding claim in which the beam of radiant energy is a laser beam.

5. A method according to claim 4 in which the laser beam has wavelength 10.6μm and is provided by a single-mode $CO_2$ source.

6. A method according to any preceding claim in which the beam of radiant energy is directed substantially perpendicular to the film.

7. A method according to any preceding claim in which the film consists of seven layers consisting substantially of, in sequence, polyamide, ethylene-vinyl acetate copolymer, PVDC, ethylene-vinyl acetate copolymer, LLDPE, ethylene-vinyl acetate copolymer and ethylene methacrylic acid copolymer and in which the polyamide layer is the first layer reached by the beam of incident radiant energy.

8. A method according to any preceding claim in which the film consists of seven layers consisting substantially of, in sequence, polyamide, ethylene-vinyl acetate copolymer, LLDPE, ethylene-vinyl acetate copolymer, PVDC, ethylene-vinyl acetate copolymer and ethylene methacrylic acid copolymer and in which the polyamide layer is the first layer reached by the beam of incident radiant energy.

9. A method according to any preceding claim in which the material of each layer in a central region along the path of the beam action area absorbs some of the incident radiant energy and is caused to be at a temperature at or above the softening temperature of the material.

10. A heat-shrinkable film obtainable by a method according to any preceding claim which has a line of weakness of reduced thickness bordered by two regions of increased thickness, relative to the thickness of the untreated film.

11. A method according to any of claims 1 to 9 additionally comprising forming the treated web of film into a bag.

12. A heat-shrinkable bag which is obtainable by the method of claim 11 and which has at least one line of weakness of reduced thickness bordered by two regions of increased thickness, relative to the thickness of the untreated film.

13. A method of packing an item comprising wrapping it in a film according to claim 10 or a bag according to claim 12 and heating in order to shrink the film or bag around the item.

14. A product comprising an item packed in a heat-shrink film according to claim 10 or a heat-shrunk bag according to claim 12.

## Patentansprüche

1. Verfahren zur Schaffung einer Schwächungslinie in einer kontinuierlichen Folienbahn mit einer oder mehreren Schichten, bei dem ein Strahl aus Strahlungsenergie auf die Bahn gerichtet wird, während die Wirkfläche des Strahls entlang der Bahn bewegt wird, um einen Weg auf der Bahn zu definieren, dadurch gekennzeichnet, daß die Folie wärmeschrumpfbar ist und die Intensität, die Wellenlänge und der Einfallswinkel des Strahls und die Geschwindigkeit der Wirkfläche des Strahls entlang der Bahn so gewählt sind, daß das Material von der oder mindestens einer Schicht in einem zentralen Bereich entlang des Wegs der Wirkfläche des Strahls mindestens einen Teil der einfallenden Strahlungsenergie absorbiert und auf eine Temperatur bei oder über der Erweichungstemperatur des Materials gebracht wird und die Bereiche der Folie entlang der Randbereiche und unmittelbar neben dem zentralen Bereich des Wegs auf eine Temperatur auf oder über der Schrumpftemperatur der Folie, jedoch unter der Schmelztemperatur des Materials irgendeiner Schicht gebracht werden und im wesentlichen kein Verdampfen oder Abbau des Materials irgendeiner Schicht des Folienmaterials stattfindet, wodurch die Folie in dem zentralen Bereich in der Dicke verringert wird und die Folie in den Randbereichen in der Dicke verstärkt wird.

2. Verfahren nach Anspruch 1, bei dem die Folie zwei oder mehr Schichten umfaßt.

3. Verfahren nach Anspruch 1 oder Anspruch 2, bei dem der Bereich der Folie auf dem Weg der Wirkfläche des Strahls auf eine Dicke von der 0,2- und 0,7-fachen Dicke der unbehandelten Folie verringert wird.

4. Verfahren nach einem der vorhergehenden Ansprüche, bei dem der Strahl aus Strahlungsenergie ein Laserstrahl ist.

5. Verfahren nach Anspruch 4, bei dem der Laserstrahl die Wellenlänge 10,6 μm hat und von einer $CO_2$-Quelle im Einzelmodus geliefert wird.

6. Verfahren nach einem der vorhergehenden Ansprüche, bei dem der Strahl aus Strahlungsenergie im wesentlichen senkrecht auf die Folie gerichtet wird.

7. Verfahren nach einem der vorhergehenden Ansprüche, bei dem die Folie aus sieben Schichten besteht, die im wesentlichen aus Polyamid, Ethylen/Vinylacetat-Copolymer, PVDC, Ethylen/Vinylacetat-Copolymer, LLDPE, Ethylen/Vinylacetat-Copolymer und Ethylen/Methacrylsäure-Copolymer in dieser Reihenfolge bestehen und bei dem die Polyamidschicht die erste Schicht ist, die von dem Strahl mit einfallender Strahlungsenergie erreicht wird.

8. Verfahren nach einem der vorhergehenden Ansprüche, bei dem die Folie aus sieben Schichten besteht, die im wesentlichen aus Polyamid, Ethylen/Vinylacetat-Copolymer, LLDPE, Ethylen/Vinylacetat-Copolymer, PVDC, Ethylen/Vinylacetat-Copolymer und Ethylen/Methacrylsäure-Copolymer in dieser Reihenfolge bestehen und bei dem die Polyamidschicht die erste Schicht ist, die von dem Strahl mit einfallender Strahlungsenergie erreicht wird.

9. Verfahren nach einem der vorhergehenden Ansprüche, bei dem das Material von jeder Schicht in einem zentralen Bereich entlang des Wegs der Wirkfläche des Strahls etwas von der einfallenden Strahlungsenergie absorbiert und auf eine Temperatur bei oder über der Erweichungstemperatur des Materials gebracht wird.

10. Wärmeschrumpfbare Folie, die nach einem Verfahren gemäß einem der vorhergehenden Ansprüche erhältlich ist, die eine Schwächungslinie mit verringerter Dicke, umsäumt von zwei Bereichen mit verstärkter Dicke, relativ zu der Dicke der unbehandelten Folie aufweist.

11. Verfahren gemäß einem der Ansprüche 1 bis 9, bei dem zusätzlich die behandelte Folienbahn zum Beutel geformt wird.

12. Wärmeschrumpfbarer Beutel, der nach dem Verfahren gemäß Anspruch 11 erhältlich ist und mindestens eine Schwächungslinie mit verringerter Dicke, umsäumt von zwei Bereichen mit verstärkter Dicke, relativ zu der Dicke der unbehandelten Folie aufweist.

13. Verfahren zum Verpacken einer Ware, bei dem sie in eine Folie gemäß Anspruch 10 oder einen Beutel gemäß Anspruch 12 gepackt und erwärmt wird, um die Folie oder den Beutel um die Ware herum zu schrumpfen.

14. Produkt, das eine in eine Wärmeschrumpffolie gemäß Anspruch 10 oder einen wärmegeschrumpften Beutel gemäß Anspruch 12 verpackte Ware umfaßt.

**Revendications**

1. Méthode de formation d'une ligne d'affaiblissement dans une bande continue d'un film ayant une ou plusieurs couches, consistant a diriger, sur la bande, un faisceau d'énergie rayonnante tout en provoquant le mouvement le long de la bande de l'aire d'action du faisceau pour définir un trajet sur la bande caractérisée en ce que le film est thermorétractable et l'intensité, la longueur d'onde et l'angle d'incidence du faisceau et la vitesse de l'aire d'action du faisceau le long de la bande sont sélectionnés de façon que le matériau de la ou au moins une couche dans une région centrale le long du trajet de l'aire d'action du faisceau absorbe au moins une partie de l'énergie rayonnante incidente et soit forcé à être a une température a ou au-delà de la température d'amollissement du matériau et les régions du film le long des bordures de et directement adjacentes a ladite région centrale du trajet sont forcées a être à une température à ou au-dessus de la température de rétrécissement du film mais en-dessous de la température de fusion du matériau de toute couche et sensiblement aucune évaporation ni dégradation du matériau d'une couche du matériau du film ne se produit, ainsi, le film dans ladite région centrale se trouve réduit en épaisseur et le film dans lesdites régions des bordures se trouve augmenté en épaisseur.

2. Méthode selon la revendication 1 dans laquelle le film comprend deux couches ou plus.

3. Méthode selon la revendication 1 ou la revendication 2 dans laquelle la région du film dans le trajet de l'aire d'action du faisceau est réduite à une épaisseur de 0,2 à 0,7 fois l'épaisseur du film non traité.

4. Méthode selon toute revendication précédente où le faisceau d'énergie rayonnante est un faisceau laser.

5. Méthode selon la revendication 4 dans laquelle le faisceau laser a une longueur d'onde de 10,6 $\mu$m et est formé d'un source de $CO_2$ en seul mode simple.

6. Méthode selon toute revendication précédente, dans laquelle le faisceau de l'énergie rayonnante est dirigé sensiblement Perpendiculairement au film.

7. Méthode selon toute revendication précédente, dans laquelle le film consiste en sept couches consistant sensiblement en, en séquence, polyamide, copolymère d'éthyléne-acétate de vinyle, PVDC, copolymère d'éthylène-acétate de vinyle, LLDPE, copolymère d'éthylène-acétate de vinyle et copolymère d'éthylène-acide méthacrylique et où la couche de polyamide est la première couche atteinte par le faisceau incident d'énergie rayonnante.

8. Méthode selon toute revendication précédente, dans laquelle le film se compose de sept couches consistant sensiblement en, en séquence, polyamide, copolymère d'éthylène-acétate de vinyle, LLDPE, copolymère d'éthylène-acétate de vinyle, PVDC, copolymère d'éthylène-acétate de vinyle et copolymère d'éthylène-acide méthacrylique et où la couche de polyamide est la première couche atteinte par le faisceau incident d'énergie rayonnante.

9. Méthode selon toute revendication précédente dans laquelle le matériau de chaque couche dans une région centrale le long du trajet de l'aire d'action du faisceau absorbe une partie de l'énergie rayonnante incidente et est forcé à être à une température à ou au-dessus de la température d'amollissement du matériau.

10. Film thermorétractable pouvant être obtenu par une méthode selon toute revendication précédente qui a une ligne d'affaiblissement d'épaisseur réduite bordée par deux régions d'épaisseur accrue relativement à l'épaisseur du film non traité.

11. Méthode selon l'une des revendications 1 à 9 comprenant additionnellement la formation de la bande traitée de film en un sac.

12. Sac thermorétractable qui peut être obtenu par la méthode de la revendication 11 et qui a au moins une ligne d'affaiblissement d'épaisseur réduite bordée par deux régions d'épaisseur accrue relativement à l'épaisseur du film non traité.

13. Méthode d'emballage d'un article consistant à l'envelopper dans un film selon la revendication 10 ou un sac selon la revendication 12 et à le chauffer afin de faire rétrécir le film ou le sac autour de l'article.

14. Produit comprenant un article emballé dans un film thermorétréci selon la revendication 10 ou un sac thermorétréci selon la revendication 12.

FIGURE 1

FIGURE 2